Europäisches Patentamt

European Patent Office

Office européen des brevets

(19)

(11) Numéro de publication: **0 165 363**
**B1**

(12) **FASCICULE DE BREVET EUROPEEN**

(45) Date de publication du fascicule du brevet: **31.08.88**

(51) Int. Cl.⁴: **H 04 M 3/22**

(21) Numéro de dépôt: **84430019.4**

(22) Date de dépôt: **20.06.84**

(54) **Circuit detecteur de variations de courant.**

(43) Date de publication de la demande:
**27.12.85 Bulletin 85/52**

(45) Mention de la délivrance du brevet:
**31.08.88 Bulletin 88/35**

(84) Etats contractants désignés:
**BE DE FR GB IT NL**

(56) Documents cités:
**DE-B-2 851 848**
**FR-A-2 216 585**
**FR-A-2 439 998**
**FR-A-2 460 077**

(73) Titulaire: **International Business Machines**
**Corporation**
**Old Orchard Road**
**Armonk, N.Y. 10504 (US)**
(84) **BE DE GB IT NL**

(73) Titulaire: **Compagnie IBM FRANCE**
**5 Place Vendôme**
**F-75000 Paris 1er (FR)**
(84) **FR**

(72) Inventeur: **Bonnet, Yves Aimé Jean**
**Villa Jo-Aimé 135 Avenue H. Brun**
**F-06700 Saint Laurent du Var (FR)**
Inventeur: **Jacquart, Christian**
**1600 Chemin de Provence**
**F-06510 Gattières (FR)**

(74) Mandataire: **Tubiana, Max**
**Compagnie IBM France**
**Département de Propriété Industrielle**
**F-06610 La Gaude (FR)**

Courier Press, Leamington Spa, England.

## Description

Domaine Technique de l'invention

La présente inventon a pour objet un détecteur de courant circulant dans un circuit pouvant notamment être une ligne de transmission. Elle s'applique plus particulièrement à la détection du décrochage d'un combiné téléphonique par détection des variations du courant continu circulant dans la ligne téléphonique.

Que ce soit pour permettre le démarrage d'un compteur destiné à la facturation de conversations téléphoniques, ou pour prendre toute autre décision, il est souvent nécessiare de pouvoir détecter qu'un abonné a décroché son combiné téléphonique. Plus généralement, il peut être utile de constater certains changements dans la valeur du courant circulant dans une ligne téléphonique. La solution qui consiste simplement à rajouter une impédance en série dans la ligne et à mesurer les variations de tensions se manifestant aux bornes de ladite impédance (voir notamment le brevet Siemens DE—B—2851848), soulève, en pratique quelques difficultés. La plus immédiate à comprendre tient au fait que cette impédance vient augmenter l'impédance de ligne se présentant à la sortie du central téléphonique auquel est rattaché l'aborné appelé. Pour respecter les normes fixées pour l'utilisation dudit central, on est alors amené à réduire les longueurs des lignes qui pourraient lui être connectées. Ceci réduit le territoire pourvant être desservi par ce central téléphonique, ce qui est un inconvénient. A titre d'exemple, on notera que certaines lignes téléphoniques ont une impédance de 120 ohms/km. Or pour que le fonctionnement de l'installation téléphonique soit dans les normes, l'impédance totale de la ligne rattachée au central doit être intérieure une limite pré-établie; ce qui limite donc la longueur de ligne utilisable et donc le rayon du territoire accessible audit central téléphonique. Rajouter 100 ohms en série dans la ligne pour mesurer le courant qui y circule, réduit ce rayon de près d'un km, ce qui est inacceptable.

Il faut en outre que le circuit utilisant l'information de détection du courant de ligne soit isolé diélectriquement de ladite ligne.

Une solution pour résoudre ce type de problème a été fournie par l'utilisation de coupleurs opto-électroniques. Outre le fait que la diode électrominescente utilisée dans ce cas produit une chute de 1,4 V de la tension de ligne, des problèmes de coût et de fiabilité peuvent résulter de l'utilisation de ces coupleurs.

Brève description de l'invention

La présente invention fournit un dispositif qui tout en introduisant une impédance série faible dans un circuit permet de mesurer de manière fiable des variations de courant dans ledit circuit.

Plus précisément l'invention concerne une dispositif de détection des variations d'un courant $I_L$ circulant dans un circuit comportant une impédance connectée en série dans ledit circuit, de manière à être traversée par le courant à détecter, ledit dispositif étant caractérisé par:

un générateur de tension constante chargé de fournir une tension prédéterminée entre les bornes de ladite impédance et,

des moyens de mesure reliée audit générateur de manière à permettre la détection des variations du courant fourni par ledit générateur de tension constante, variations dues aux variations du courant $I_L$.

On comprendra en outre à la lecture de la description suivante, que le détecteur de l'invention peut être utilisé pour détecter les variations d'un courant circulant dans un ligne téléphonique tout en perturbant au minimum les conditions d'exploitation de ladite ligne téléphonique.

D'autres objets caractéristiques et avantages de l'invention, ressortiront de la description suivante, faite en se référant aux dessins annexés.

Brève description des figures

Figure 1: exemple d'application de l'invention.

Figure 2: un mode de réalisation de l'invention.

Figure 3: un mode du réalisation perfectionnée de l'invention.

Figure 4: un diagramme illustrant le fonctionnement du dispositif représenté sur la figure 3.

Description détaillée de l'invention

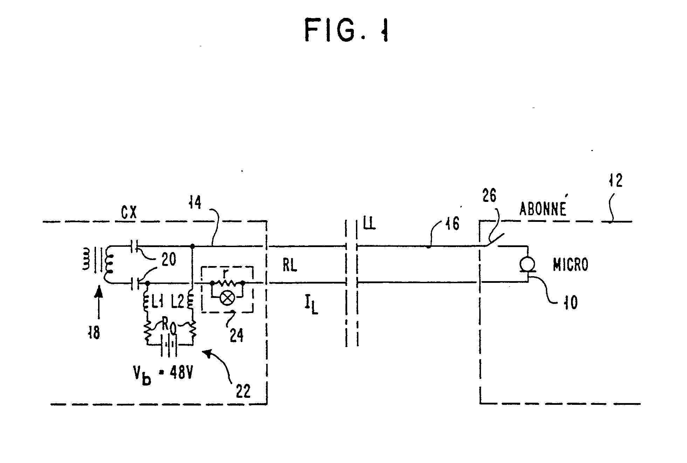

On a représenté sur la figure 1, un circuit simplifié permettant de situer l'invention dans le contexte d'une installation téléphonique. Le microphone (10) du combiné téléphonique d'un abonné (12) est relié à un central téléphonique CX (14) à travers une ligne téléphonique LL (16). Le circuit de ligne ou circuit d'interface placé à la sortie du central téléphonique 14 comporte, notamment, un transformateur basses fréquences (BF) 18 dit transformateur de ligne, des condensateurs de couplage 20 et un circuit d'alimentation 22. Le circuit d'alimentation 22 a été schématisé par une batterie de $V_b$=48 V attaquant la ligne LL à travers une résistance $R_0$ et des self inductances L1 et L2. Cette batterie sert notamment à fournir un courant continu de ligne alimentant le microphone 10. Les signaux de parole fournis par le microphone 10 sont envoyés à leur destinataire (non représenté) à travers le transformateur BF 18. Les selfs inductances L1 et L2 créent une impédance alternative élevée empéchant la perte des signaux BF du microphone 10 dans le circuit d'alimentation 22. Ou a schématisé en 24, le circuit de l'invention permettant de mesurer le courant $I_L$ circulant dans la ligne téléphonique LL. En fait, ce que l'on désire déceler, ce sont les variations de ce courant $I_L$ se produisant lorsque l'abonné 12 décroche son téléphone, ce qui entraîne la fermeture de l'interrupteur 26. On a désigné par $R_L$, l'impédance de la ligne LL.

En régime statique, c'est-à-dire, en l'absence de tout courant de parole engendré par le microphone 10, et en l'absence de tout appareil de mesure 24, le courant $I_L$ circulant dans la ligne

est égal à:

$$I_L = \frac{V_b}{\Sigma R} = \frac{V_b}{R_o + R_L + R_{TS}}$$

où $R_{TS}$ est la résistance due au circuit du microphone 10.

Un fonctionnement correct de l'installation téléphonique est obtenu lorsque $I_L$ varie de plus de 10 mA en valeur absolue pour traduire un décrochage du combiné téléphonique de l'abonné 12. Plus l'abonné 12 est éloigné du central téléphonique 14, plus $R_L$ est élevé (en supposant la section des conducteurs de ligne identique pour tous les utilisateurs). Connaissant $V_b$, $R_o$ et $R_{TS}$, on en déduit la valeur limite que peut atteindre $R_L$ pour que $I_L$ soit dans des normes prédéterminées. Connaissant les caractéristiques de la ligne utilisée, on en déduit la longueur maximum de ligne utilisable entre le central téléphonique 14 et l'abonné 12 desservi par ce central.

Toute introduction de résistance en série dans le circuit de ligne, se fait au détriment de la distance maximale possible entre central et abonné. Ceci explique qu'il faille réduire autant que possible l'impédance série r introduite dans la ligne LL par l'appareil de mesure 24. Dans le mode de réalisation de l'invention qui sera décrit plus bas, ou utilisera une résistance r=10 ohms. En supposant que la ligne LL soit d'un type tel que son impédance soit de 120 ohms/km, l'introduction du circuit détecteur de courant de ligne 24 revient à raccourcir de 100 m le rayon du territoire que le central 14 pourra desservir.

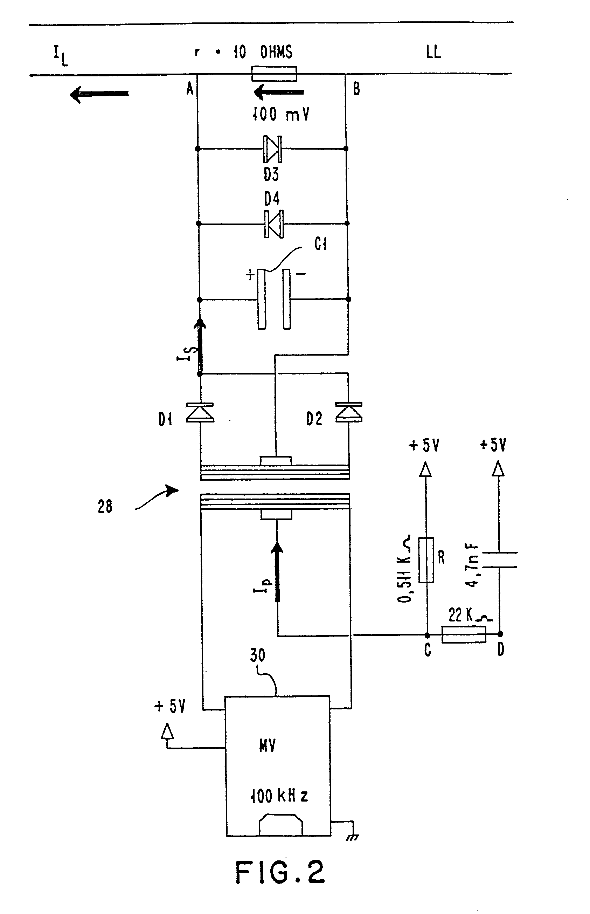

On a représenté sur la figure 2 un mode de réalisation du circuit détecteur 24 selon l'invention. La résistance r qui a été choisie pour avoir une valeur de 10 ohms est représentée dans la partie supérieure de la figure. Elle est en série dans l'un des conducteurs de la ligne LL. Le circuit de l'invention comportera un générateur chargé de fournir une tension prédéterminée, par exemple égale à 100 mV, entre les bornes de A et B de la résistance r. Ceci étant, le courant débité par ledit générateur de tension variera en fonction du courant de ligne $I_L$ proprement dit, traversant r. La tension fournie par le générateur est en fait obtenue à partir d'une onde haute-fréquence (HF) 100 kHz par exemple engendrée au primaire d'un transformateur HF 28, redressée au secondaire dudit transformateur HF 28 et filtrée avant d'être appliquée aux bornes AB. Pour obtenir l'onde HF, on a placé aux bornes du primaire du transformateur HF 28, un circuit de commutation ou multivibrateur (MV) 30, qui connecte alternativement et à une fréquence de 100 kHz, les extrémités dudit primaire, à la masse.

D'autre part, le point milieu de ce même primaire est relié à l'une des bornes d'une source de tension continue, ici égale à 5V, à travers une résistance R=511 ohms. L'information recherchée, à savoir celle traduisant le décrochage du combiné téléphonique (non représenté) rattaché à la ligne LL sera disponible en C comme on le verra plus loin. Mais on a placé en C, par précaution, un filtre passe-bas comportant une résistance de 22 k ohms et un condensateur de 4,7 nF chargé d'éliminer les bruits parasites de commutation; et l'information recherchée sera lue au point D. Le secondaire du transformateur 28 attaque un redresseur bi-alternance comportant deux diodes D1 et D2. Le point milieu dudit secondaire est relié au point B. La sortie du redresseur attaque un condensateur de filtrage C1. Enfin, deux diodes D3 et D4 sont montées têtes-bêches aux bornes du condensateur C1, bornes elles mêmes reliées aux points A et B respectivement.

En fonctionnement et de manière schématique, lorsque le combiné téléphonique (non représenté) est raccroché, le courant $I_L$=0. Dans ce cas, le secondaire du transformateur 28 va débiter 10 mA à partir de l'onde HF redressée et filtrée, engendrant une tension de 100 mV aux bornes AB de la résistance r. Au décrochage, un courant de ligne $I_L$ est fourni par la batterie $V_b$ (non représentée). Le courant va traverser la résistance r et l'expression du courant Is au secondaire du transformateur 28 peut être décrite comme suit:

$$Is = \frac{V_r}{r}$$

$$= \frac{V_A - V_B}{r}$$

$$= \frac{E_s - r\, I_L}{r}$$

$$= \frac{E_s}{r} - I_L$$

avec Is toujours ≥ 0 due aux diodes $D_1$ et $D_2$.

Deux cas peuvent se produire:

1. courant positif:
   exemple: $I_L$=+20 mA
   donne Is=0 mA (en fait, −10 mA limité à 0 mA)

2. courant négatif:
   exemple: $I_L$=−20 mA
   $I_s$=+30 mA

Il est à remarquer que le courant primaire $I_p$ est limité à 10 mA max par la présence de la résistance R=511 ohms.

Cette variation de courant est répercutée au primaire du transformateur 28, donc elle est répercutée au niveau du cournat traversant la résistance R=511 ohms, ce qui crée une variation de tension aux points C et D.

En d'autres termes, on peut dire que le circuit de l'invention utilise un convertisseur de tension continu/continu (DC/DC) passant par la génération d'une onde HF, lequel convertisseur délivre une tension continue relativement constante. Pour le circuit décrit ci-dessus, cette tension est d'environ 100 mV. En plaçant ce convertisseur aux bornes de la résistance r en série dans la ligne LL, le courant débité par le convertisseur vient se combiner avec le courant de ligne $I_L$. Les variations du courant $I_L$ entraînent donc des variations du courant $I_s$ fourni au secondaire de transformateur 28. Ces variations de $I_s$ sont répercutées au primaire du transformateur 28, donc dans le courant $I_p$ traversant la résistance R. Ce sont ces variations qui sont détectées aux points C et D. En prélevant l'information recherchée en l'un de ces points, l'isolement désiré entre la ligne et l'appareil de mesure de cette information se trouve établi par le transformateur HF 28. En outre, le signal HF utilisé ayant une fréquence de 100 kHz, toute composante résiduelle éventuellement envoyée sur la ligne LL ne pourrait nuire à la liaison téléphonique puisqu'elle serait en dehors de la bande des fréquences dites téléphoniques.

On notera en outre que la détection recherchée peut se faire quel que soit le sens du courant $I_L$. On versa plus loin que le circuit de l'invention fait mieux encore, il permet de déceler très simplement une inversion de courant traduisant par exemple une inversion des pôles de la batterie $V_b$.

En outre, en pratique, les PTT admettent qu'un courant de fuite puisse exister sur la ligne LL même lorsque le combiné téléphonique qui lui est attaché n'est pas décroché. L'information recherchée, traduisant le décrochage du combiné téléphonique 10, amené alors à détecter que le courant le ligne $I_L$ en valeur absolue est au dessus d'une valeur prédéterminée, soit par exemple:

$$I_L \geq 10 \text{ mA}$$

Enfin, il est bon que l'information détectée soit indépendante des variations dans le temps des éléments composant le circuit utilisé.

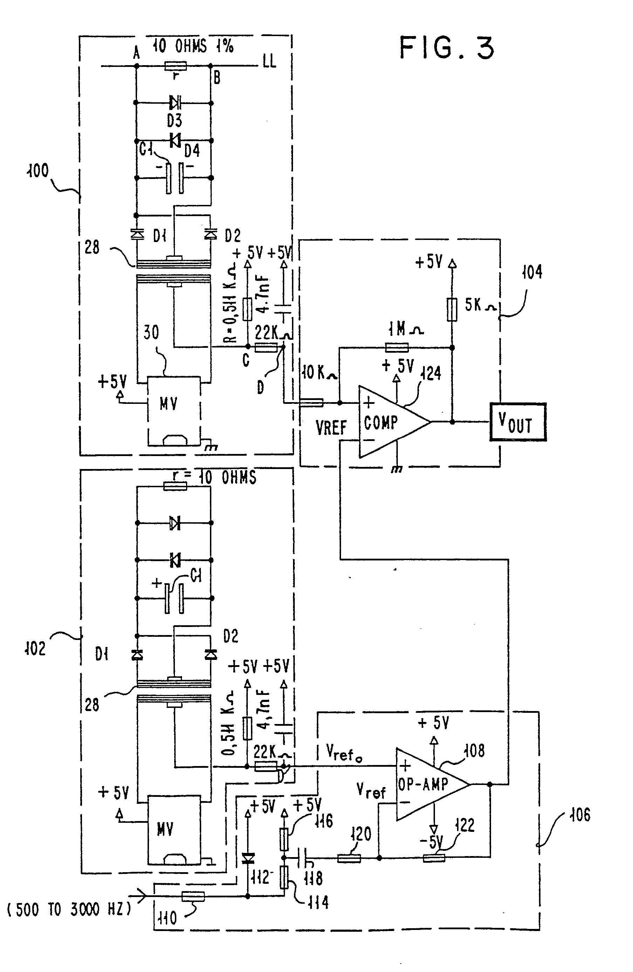

Le circuit de la figure 3 permet d'atteindre l'ensemble des objectifs décrits ci-dessus grâce à l'emploi d'un circuit de référence semblable au convertisseur DC/DC de la figure 1. Le circuit de la figure 3 comporte donc essentiellement d'une part un circuit (100) identique à celui de la figure 1; d'autre par un circuit (102) dit de référence semblable à celui de la figure 1 à ceci près que la résistance r=10 ohms n'est pas insérée dans une ligne téléphonique LL; et enfin un circuit comparateur (104). En fait, on remarque sur la figure 3, l'existence d'un quatrième circuit (106) dont on verra le rôle plus loin.

Le circuit 106 comporte un amplificateur opérationnel 108 dont l'entrée noninverseuse (+) est reliée à la sortie D' du circuit de référence 102. L'entrée inverseuse (−) de l'amplificateur opérationnel 108 est reliée à un générateur (non représenté) de tension alternative dont la fréquence est comprise, dans le cas considéré, entre 500 et 3000 Hz. La sortie du générateur non représenté est connectée à l'une des bornes d'une résistance 110. L'autre borne de la résistance 110, est reliée à

une source de tension continue (+5 V) à travers deux résistances 114 et 116 et à la borne (−) de l'amplificateur 108 à travers la résistance 114, un condensateur 118 et une résistance 120. Une résistance 122 établit un circuit de réaction entre la sortie de l'amplificateur 108 et son entrée (−). Ceci étant, le circuit 106 se comporte comme un circuit additionneur. Ce circuit additionne un signal alternatif dit Vref fourni par le générateur (non représenté) dont la fréquence est comprise entre 500 et 3000 Hz, à la tension Vref0 obtenue au point D' du circuit 102. Les éléments de circuit portant les références 110 à 122 seront choisis de manière telle que l'amplitude crête à crête de la tension Vref soit telle qu'elle corresponde au double de l'amplitude de la variation de la tension qui apparaîtrait au point D du circuit 100 pour une variation du courant de ligne $I_L$ de 10 mA. On notera que dans le cas où les normes fixées, par exemple par les PTT, seraient différentes, c'est-à-dire dans le cas où les PTT exigeraient que l'information à détecter soit différente de celle correspondant à une variation minimale du courant de ligne de ±10 mA, on choisirait l'amplitude de la tension Vref en conséquence.

On obtient donc à la sortie de l'amplificateur opérationnel 108, une tension dite de référence VREF telle que:

$$VREF = Vref0 + Vref$$

Le circuit 104 est un circuit comparateur de type classique. Il comporte notamment un comparateur de tension 124 dont l'entrée (−) est reliée à la sortie du circuit 106 et reçoit donc le signal VREF, tandis que son entrée (+) est reliée au point D du circuit 100 et reçoit donc la tension VD à analyser.

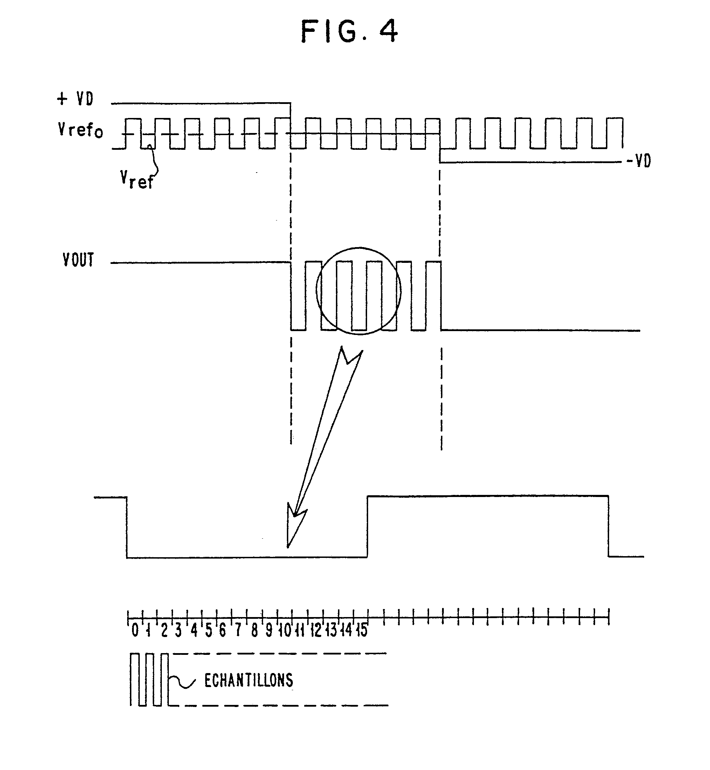

On a représenté sur la figure 4 les différents signaux à analyser. La ligne supérieure représente les tension appliquées à l'entrée du comparateur 104. La tension VREF est repréentée par une onde alternative Vref oscillant autour d'une valeur Vref0. La tension VD a été représentée de manière à traduire les trois différents cas possibles. A savoir, les deux cas extrêmes montrent un VD d'amplitude relative supérieure à la crête de VREF, mais pouvant être positif (+VD) ou négatif (−VD). Ceci traduit le fait que le courant de ligne $I_L$ peut circuler dans un sens de A vers B ou inversement de B vers A. En effet, le sens de circulation du courant $I_L$ dépend des polarités de la source $V_b$ (voir figure 1). Par contre le sens de Is (voir figure 2) est invariant. Donc pour traduire le déchrochage du combiné téléphonique de l'abonné (voir figure 1), le courant $I_s$ va soit augmenter, soit diminuer.

Enfin, la partie centrale du signal représenté sur la ligne supérieure de la figure 4, montre VD pour un combiné téléphonique raccroché ($I_L=0$).

La seconde ligne de la figure 4 montre le signal (VOUT) sortant du comparateur 124 pour des signaux d'entrée selon ceux représentés dans la partie supérieur de la figure. On remarque qu'aux extrémites, la courbe représentée reste à un niveau logique constant traduisant un état dit combiné décroché, mais en outre cette information logique est soit positive soit négative. Ce signe traduit la polarité de la source $V_b$ (voir figure 1). Cette information logique permet donc soit de connaître cette polarité, soit de détecter une permutation éventuelle des polarités de $V_b$ en cours de fonctionnement. Enfin, la partie centrale de la courbe VOUT est représentée dans la partie inférieure de la figure 4 pour montrer comment elle peut être traitée par des moyens logiques. L'onde alternative est simplement échantillonnée pour être analysée par des moyens informatiques (non représentés) qui indiqueraient s'il y a bien une onde alternative en VOUT traduisant un combiné d'abonné raccroché. Ceci permet d'éviter les fausses détections de décrochages qui seraient dûs à des signaux de lignes parasites.

Enfin, on notera qu'un même circuit de référence (102, 106) peut naturellement être utilisé pour plusieurs lignes LL ou plusieurs circuits (100).

Bien que l'on ait décrit dans ce qui précède et représenté sur les dessins annexés un mode de réalisation préférée de l'invention, il est évident que l'homme de l'art peut y apporter de nombreuses modifications sans sortir du cadre de l'invention.

**Revendications**

1. Dispositif de détection des variations d'un courant $I_L$ circulant dans un circuit comportant une impédance (r) connectée en série dans ledit circuit, de manière à être traversée par le courant à détecter, ledit dispositif étant caractérisé par:
   un générateur de tension constante chargé de fournir une tension prédéterminée entre les bornes de ladite impédance (r) et,
   des moyens de mesure (R) reliés audit générateur de manière à permettre la détection des variations du courant fourni par ledit générateur de tension constante, variations dues aux variations du courant $I_L$.

2. Dispositif de détection selon la revendication 1 caractérisé en outre en ce que le seuil de l'amplitude du courant $I_L$ à détecter est prédéterminé.

3. Dispositif de détection selon l'une des revendications 1 ou 2 caractérisé en ce que ledit circuit dans lequel circule le courant $I_L$ dont les variations sont à détecter est une ligne téléphonique (LL) reliant un central téléphonique (CX) à un abonné (12).

4. Dispositif de détection selon l'une des revendications 1 à 3 caractérisé en outre en ce que ledit générateur de tension constante est constitué par un générateur de tension alternative haute fréquence (30) dont la sortie est redressée (28, D1, D2) et filtrée (C1, D3, D4) avant d'être appliquée aux bornes de l'impédance (r).

5. Dispositif de détection selon l'une des revendications 1 à 4 caractérisé en ce que ledit générateur de tension constante comporte:
   un transformateur HF (28) ayant un enroulement primaire et un enroulement secondaire;
   des moyens pour relier le point milieu dudit primaire à une source de tension continue à travers une impédance (R);
   des moyens (30) pour connecter alternativement et à une fréquence HF, les extrémités dudit primaire à la masse;
   des moyens redresseurs (D1, D2) reliés au secondaire dudit transformateur HF; et,
   des moyens de filtrage passe-bas (C1, D3, D4) reliés auxdits moyens redresseurs d'une part et aux bornes de ladite impédance (r) traversée par le courant à détecter d'autre part.

6. Dispositif de détection selon la revendication 5 caractérisé en outre en ce qu'il comporte un filtre basses-fréquences placé aux bornes de l'impédance (R) dudit générateur de tension constante.

7. Dispositif de détection des variations d'un courant circulant dans une impédance placée en série dans un circuit, ledit dispositif étant caractérisé en ce qu'il comprend:
   un comparateur (104);
   un circuit générateur de tension de référence VREF (102, 106) connecté à l'une des entrées dudit comparateur; et,
   des moyens pour relier l'autre entrée du comparateur à la sortie dudit dispositif de détection selon l'une des revendication 1 à 6, lesdits moyens de comparaison fournissant un signal logique traduisant l'information relative à la variation de courant $I_L$ recherchée en amplitude et en direction.

8. Dispositif de détection selon la revendication 7 caractérisé en outre en ce que ledit générateur de tension de référence VREF comprend:
   un générateur de tension alternative dont l'amplitude crête à crête est sensiblement égale au double de la variation de tension que mesurerait lesdits moyens de mesure pour une variation du courant $I_L$ égale audit seuil du $I_L$ à détecter;
   un circuit générateur de tension de référence (102) semblable au circuit du dispositif de détection selon l'une des revendications 4 ou 5 à ceci près que l'impédance (r) n'est pas traversée par le courant à détecter; et,
   des moyens d'addition (106) reliés audit générateur de tension alternative et audit circuit générateur de tension de référence de manière à additionner les tensions fournies par ces générateurs.

**Patentansprüche**

1. Vorrichtung für die Detektion von Schwankungen eines Stroms $I_L$, der in einem Kreislauf fliesst, der eine in Serie in besagten Kreis geschaltete Impedanz (r) enthält, sodass sie vom zu detektierenden Strom durchflossen wird, wobei besagte Vorrichtung gekennzeichnet ist durch:
   einen Konstantspannungsgenerator, der die Aufgabe hat, zwischen den Klemmen der besagten Impedanz (r) eine vorgegebene Spannung anzulegen,
   Messmittel (R), die an den besagten Generator angeschlossen sind, um die durch die Änderungen des Stromes $I_L$ bedingten Schwankungen des Stromes zu detektieren, der durch besagten Konstantspannungsgenerator abgegeben wird.

2. Detektionsvorrichtung gemäss Anspruch 1, ferner dadurch gekennzeichnet, dass die Schwelle der Amplitude des zu detektierenden Stromes $I_L$ vorgegeben ist.

3. Detektionsvorrichtung gemäss einem der Ansprüche 1 oder 2, dadurch gekennzeichnet, dass besagte Schaltung, in der der Strom $I_L$ fliesst und deren Wandlungen zu detektieren sind, eine Telefonleitung (LL) ist, welche einen Fernsprechteilnehmer (12) mit einer Fernsprechzentrale (CX) verbindet.

4. Detektionsvorrichtung gemäss einem der Ansprüche 1 bis 3, ferner dadurch gekennzeichnet, dass der besagte Konstantspannungsgenerator aus einem Hochfrequenzwechselspannungsgenerator (30) besteht, dessen Ausgangsspannung gleichgerichtet (28, D1, D2) und gefiltert (C1, D3, D4) wird, bevor sie an den Klemmen der Impedanz (r) angelegt wird.

5. Detektionsvorrichtung gemäss einem der Ansprüche 1 bis 4, dadurch gekennzeichnet, dass der besagte Konstantspannungsgenerator enthält:

einen Hochfrequenzwandler (28) mit einer Primärwicklung und einer Sekundärwicklung, Mittel für den Anschluss des Mittelpunktes der besagten Primärwicklung an eine Gleichspannungsquelle durch eine Impedanz (R);

Mittel (30), um die Enden der besagten Primärwicklung abwechselnd an eine Hochfrequenz und an die Masse anzuschliessen

Gleichrichtmittel (D1, D2), die an die Sekundärwicklung des besagten HF-Wandlers angeschlossen sind, und

Tiefpassfiltermittel (C1, D3, D4), welche an besagte Gleichrichtermittel einerseits und an die Klemmen der besagten Impedanz (r) andererseits angeschlossen sind, durch welche der zu detektierende Strom fliesst.

6. Detektionsvorrichtung gemäss Anspruch 5, ausserdem dadurch gekennzeichnet, dass sie einen Tiefpassfilter an den Klemmen der Impedanz (R) des besagten Konstantspannungswandlers enthält.

7. Vorrichtung für die Detektion der Schwankungen eines Stromes, der in einer in Serie in einen Kreis geschalteten Impedanz fliesst, wobei besagte Vorrichtung dadurch gekennzeichnet ist, dass sie umfasst:

einen Vergleicher (104);

eine Bezugsspannungsgeneratorschaltung VREF (102, 106), die an eine der Eingänge des besagten Vergleichers angesdchlossen ist; und

Mittel, um den anderen Eingang des Vergleichers an den Ausgang der besagten Detektionsvorrichtung gemäss einem der Ansprüche 1 bis 6 anzuschliessen, wobei besagte Vergleichsmittel ein logisches Signal abgeben, das die Information der gesuchten Schwankung des Stroms $I_L$ in Amplitude und Richtung wiedergibt.

8. Detektionsvorrichtung gemäss Anspruch 7, ferner dadurch gekennzeichnet, dass der besagte Bezugsspannungsvergleicher VREF enthält:

einen Wechselspannungsgenerator, dessen Amplitude Spitze/Spitze annähernd gleich der doppelten Spannungsänderung ist, welche besagte Messmittel für eine Veränderung des Stromes $I_L$ gleich der besagten Schwelle des zu detektierenden Stromes $I_L$ messen würden;

eine Bezugsspannungsgeneratorschaltung (102), ähnlich wie die Schaltung der Detektionsvorrichtung gemäss einem der Ansprüche 4 oder 5, davon abgesehen, dass die Impedanz (r) nicht durch den zu detektierenden Strom durchflossen wird; und

Addiermittel (106), die an besagten Wechselspannungsgenerator und an besagte Bezugsspannungsgeneratorschaltung angeschlossen sind, um die von diesen Generatoren abgegebenen Spannungen zu addieren.

**Claims**

1. A device for detecting variations of a curernt $I_L$ flowing in a circuit comprising an impedance (r) series-connected in said circuit so that the current to be detected flows therethrough, said device being characterized in that it includes:

a constant voltage generator for supplying a predetermined voltage across said impedance (r), and

measurement means (R) connected to said generator to permit detecting variations of the current supplied by said constant voltage generator that are due to variations of current $I_L$.

2. A detection device according to claim 1, further characterized in that the amplitude threshold of the current $I_L$ to be detected is predetermined.

3. A detection device according to claim 1 or 2, characterized in that said circuit in which flows the current $I_L$ whose variations are to be detected is a telephone line (LL) connecting a central exchange (CX) to a telephone subscriber (12).

4. A detection device according to any one of claims 1 to 3, further characterized in that said constant voltage generator is a high-frequency AC voltage generator (30) whose output is rectified (28, D1, D2) and filtered (C1, D3, D4) before it is applied across impedance (r).

5. A detection device according to any one of claims 1 to 4, characterized in that said constant voltage generator includes:

a high-frequency transformer (28) having a primary winding and a secondary winding, means for connecting the center tap of said primary winding to a DC voltage source through an impedance (R),

means (30) for causing the leads of said primary winding to be alternatively connected to ground at a high frequency,

rectifier means (D1, D2) connected to said secondary winding of said high-frequency transformer, and

low-pass filter means (C1, D3, D4) connected, on the one hand, to said rectifier means and, on the other hand, across said impedance (r) through which flows the current to be detected.

6. A detection device according to claim 5, further characterized in that it includes a low-frequency filter connected across said impedance (R) in said constant voltage generator.

7. A device for detecting variations of a current flowing through an impedance connected in series in a circuit, said device being characterized in that it includes:

a comparator (104),

a reference voltage (VREF) generator (102, 106) connected to one of the inputs of said comparator, and

means for connecting the other input of the generator to the output of said detection device according to any one of claims 1 to 6, said comparator means supplying a logic signal representative of the information relating to amplitude and directional variations of current $I_L$.

8. A detection device according to claim 7, further characterized in that said generator of reference voltage VREF includes:

an AC voltage generator whose peak-to-peak amplitude is substantially equal to twice the voltage variation that would be measured by said measurement means for a variation of current $I_L$ equal to said threshold of said current $I_L$ to be measured,

a reference voltage generator circuit (102) similar to the detection device circuit according to claim 4 or 5 except that the current to be detected does not flow through impedance (r), and

adder means (106) connected to said AC voltage generator and to said reference voltage generator circuit for adding up the voltages provided by said generators.

**0 165 363**

# FIG. 1

**FIG.2**

# FIG.3

# FIG. 4

ECHANTILLONS